# EUROPÄISCHE PATENTANMELDUNG

(11) **EP 1 479 433 A1**
(43) Veröffentlichungstag der Anmeldung: **24.11.2004**
(21) Anmeldenummer: 04011599.0
(22) Anmeldetag: 15.05.2004
(51) Int. Cl.: B01J 19/00, B01L 9/06

(54) **Reaktionsgefässaufnahme für die Festphasensynthese**

(30) Priorität: 17.05.2003 DE 10322331
(71) Anmelder: Heidolph Instruments GmbH & Co.KG, 91126 Schwabach (DE)
(72) Erfinder: Werner, Klaus, 90552 Röthenbach/Pegnitz (DE); Beck, Markus, 92348 Berg/Roderbach (DE); Vollgold, Günter, 91126 Rednitzhembach (DE)
(74) Vertreter: Jany, Peter, Dr.

(57) **Zusammenfassung**

Für eine Vorrichtung (12) zum Durchführen einer Parallelsynthese, insbesondere eine Festphasensynthese, wird zum einfachen und einen guten Wärmekontakt herstellenden Befestigen der Reaktionsgefäße (1) in den Aufnahmen (13) vorgeschlagen, daß die Reaktionsgefäße (1) aus einem elastischen Material gebildet sind und mittels einer Schnappverbindung in die Aufnahmen (13) eingesetzt werden.

## Beschreibung

Die Erfindung bezieht sich auf Vorrichtungen zum Durchführen einer Parallelsynthese von Verbindungen, insbesondere auf Vorrichtungen für die Festphasensynthese. Derartige Parallelsynthese-Vorrichtungen werden besonders auf den Gebieten der kombinatorischen Synthese von Wirkstoffen (Pharma-Forschung) und neuen molekularen Materialien sowie beim Erforschen und Optimieren chemischer Reaktionen und neuartiger Katalysatoren verwendet. Dabei werden je nach Anwendungsfall auch besondere Reaktionsbedingungen, wie beispielsweise Feuchtigkeitsausschluß, Sauerstoffausschluß, Vakuum, Inertgas oder genau kontrollierte hohe oder tiefe Temperaturen eingestellt.

Um eine große Anzahl von chemischen Synthesen, beispielsweise von organischen Verbindungen oder in der pharmazeutischen Forschung, herzustellen, ist es bekannt, mit Vorrichtungen für die Parallelsynthese eine multiple, parallele Synthese einer Vielzahl von Einzelverbindungen gleichzeitig herzustellen, um den Zeit- und Kostenaufwand der Herstellung zu minimieren. Entsprechende Vorrichtungen für die Parallelsynthese, insbesondere für die Festphasensynthese, sind beispielsweise in den Dokumenten DE 297 19 919 U1, DE 196 02 464 A1, US 5,762,881 und US 6,126,904 beschrieben.

In einer vorteilhaften Ausführungsform umfaßt eine solche Vorrichtung für die Parallelsynthese, insbesondere für die Festphasensynthese, ein dreiteiliges Reaktionsgefäß. Der mittlere Teil wird von einem zylindrischen Mantelrohr aus einem chemisch beständigen Material, vorzugsweise Glas, PTFE oder PFA gebildet und ist zur Gewährung eines Sichtkontaktes zur Reaktionsflüssigkeit bevorzugt transparent. Der obere Teil, das Kopfteil, enthält das Septum und den Schlauchanschluß zum Evakuieren bzw. zum Schutzgasbegasen. Im Fußteil des Reaktionsgefäßes ist die Fritte, ein Ventil und der Schlauchanschluß zur Absaugeinrichtung oder auch zum Einleiten von perlendem Gas für das Mischen und Bewegen, für das Herausfiltern von Bestandteilen und gereinigten oder gebildeten Reaktionsprodukten oder zum Auffangen von Spüllösemitteln, von Spüllösungen oder zum Absaugen des Produktes untergebracht.

Das Kopfteil kann bedarfsweise ein entsprechendes Ventil aufweisen. Um eine gute Reinigung zu ermöglichen, kann in vorteilhaften Ausführungsformen das dreiteilige Reaktionsgefäß einfach in Mantelrohr, Kopfteil und Fußteil zerlegt werden.

Die Erfindung richtet sich auf eine optimierte Halterung der Reaktionsgefäße in der Aufnahme der Vorrichtung für Parallelsynthese. Im Bereich der Parallelsynthese, insbesondere Festphasensynthese sind verschiedene Methoden bekannt, die Reaktionsgefäße in der Gefäßaufnahme zu befestigen. Die Gefäßaufnahme dient in der Regel auch zum Beheizen des Reaktionsgefäßes. In manchen Fällen ist über der Heizzone auch eine gekühlte Kondensationszone angeordnet, mit der Dampf rückkondensiert werden kann.

Eine verbreitete Ausführungsform von Aufnahmen für die Reaktionsgefäße sind blockförmige Gefäßaufnahmen, bei denen das Reaktionsgefäß in Bohrungen gesteckt wird, siehe z.B. WO 99/13988. Nachteilig bei dieser bekannten Ausführungsform ist, daß die Reaktionsflüssigkeit nicht einsehbar ist und die Ventile und Schlauchanschlüsse schwer zu realisieren sind.

Eine vorteilhaftere, bekannte Ausführungsform, bei der Ventile und Schlauchanschlüsse im Fußteil des Reaktionsgefäßes angeordnet werden können, ist in dem Dokument US 6,126,904 offenbart. Dort werden die Reaktionsgefäße durch gefederte Formteile gehalten. Diese Ausführungsform ist jedoch kostenaufwendig, und ferner kann das Reaktionsgefäß nicht von vorne eingeführt werden. Die Reaktionsgefäße werden in einer geteilten Aufnahme gehalten, die keine Elastizität der Mantelrohre erfordert. Ein Mantelrohr kann nur in die Aufnahme eingesetzt und wieder entnommen werden, wenn ein Anpreß- bzw. Halteteil abgebaut wird oder wenn dieses Halteteil gelockert und das Reaktionsgefäß in axialer Richtung aus der vergrößerten Öffnung entnommen wird. Ein vereinfachtes Einsetzen der Reaktionsgefäße in die Aufnahme, insbesondere in einer Richtung senkrecht zur Längserstreckung der Reaktionsgefäße und ohne Betätigung oder Montage eines Halteteils, ist nicht möglich, da die Reaktionsgefäße von der zusammenmontierten zweigeteilten Aufnahme um mehr als 180° umfaßt werden.

Der Erfindung liegt unter Berücksichtigung, dieses Standes der Technik die Aufgabe zugrunde, eine verbesserte Aufnahme der Reaktionsgefäße in einer Vorrichtung für die Parallelsynthese zu schaffen.

Diese Aufgabe wird erfindungsgemäß durch eine Vorrichtung mit den Merkmalen des beigefügten Anspruchs 1 gelöst. Bevorzugte Ausgestaltungen und Weiterbildungen der Erfindung ergeben sich aus den abhängigen Ansprüchen und der nachfolgenden Beschreibung mit zugehörigen Zeichnungen.

Eine erfindungsgemäße Vorrichtung zum Durchführen einer Parallelsynthese von Verbindungen, insbesondere eine Vorrichtung für die Festphasensynthese, umfassend eine Mehrzahl von Reaktionsgefäßen, die einen als zylindrische Mantelrohre ausgebildeten Mittelteil oder Mittelteilabschnitt aufweisen, und eine Aufnahme zum Aufnehmen und Halten der Reaktionsgefäße in der Vorrichtung während der Durchführung der Parallelsynthese, weist also die Besonderheit auf, daß die Aufnahme in Längsrichtung der eingesetzten Reaktionsgefäße verlaufende Längsnuten umfaßt, wobei die Längsnuten kreisabschnittsförmig sind und zum Aufnehmen der zylindrischen Mantelrohre ausgebildet sind, die Mantelrohre aus einem geringfügig elastischen Material gebildet sind und
die Reaktionsgefäße von der durch die elastische Verformung der in die Längsnuten eingesetzten Mantelrohre erzeugten Klemmspannung, die eine radial auf die Mantelrohre gerichtete Klemmkraft erzeugt, in der Aufnahme gehalten werden.

Bei der erfindungsgemäßen Aufnahme werden die Reaktionsgefäße über eine elastische Schnappverbindung in der Aufnahme, beispielsweise einem Aufnahmeblock, eingerastet. Dadurch läßt sich eine in der Praxis besonders vorteilhafte Aufnahme und Befestigung der Reaktionsgefäße realisieren, wobei die Reaktionsgefäße leicht in die Aufnahmen eingeführt und aus diesen wieder entnommen werden können, bei der Durchführung der Synthese hinreichend fest und sicher gehalten werden, einen guten Kontakt zu einer Heizzone bzw. Kühlzone haben und, sofern die Reaktionsgefäße transparent sind, eine Beobachtung der Reaktionsflüssigkeit ermöglichen.

Die Erfindung wird nachfolgend anhand eines in den Figuren dargestellten Ausführungsbeispiels näher erläutert. Die darin beschriebenen Besonderheiten können einzeln oder in Kombination miteinander eingesetzt werden, um bevorzugte Ausgestaltungen der Erfindung zu schaffen. Es zeigen:
- Fig. 1: einen senkrechten Schnitt durch eine vorteilhafte Ausführungsform eines Reaktionsgefäßes,
- Fig. 2: einen perspektivischen Ausschnitt einer Vorrichtung für die Parallelsynthese mit Reaktionsgefäßen,,
- Fig. 3: einen waagrechten Schnitt zu Fig. 2 und
- Fig. 4: eine Einzelheit zu Fig. 3.

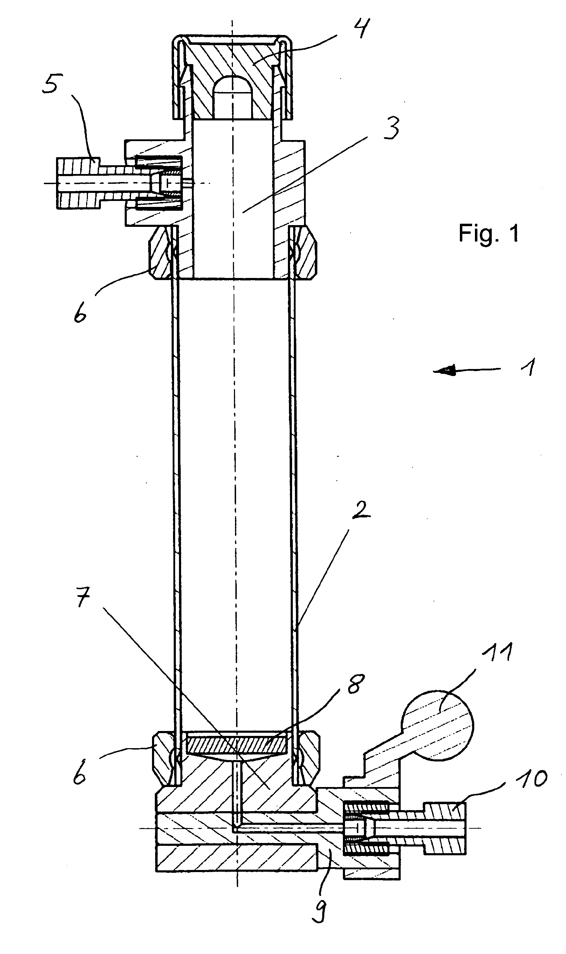

Die Fig. 1 veranschaulicht in einem Schnitt eine vorteilhafte Ausführungsform eines Reaktionsgefäßes 1 für eine Festphasensynthese. Das Reaktionsgefäß 1 umfaßt einen als zylindrisches Mantelrohr 2 ausgebildeten Mittelteil oder einen als zylindrisches Mantelrohr ausgebildeten Mittelteilabschnitt und ist mit einem Kopfteil 3, in dem sich das Septum 4 und ein Kopfteilschlauchanschluß 5 befinden, versehen. Die Verbindung zwischen dem Mantelrohr 2 und dem Kopfteil 3 erfolgt durch einen Überwurf-Klemmring 6.

Am unteren Ende weist das Reaktionsgefäß 1 ein Fußteil 7 auf, in dem sich die Fritte 8 und ein Ventil 9 oder Hahn mit einem Schlauchanschluß 10 befindet. Das Ventil 9 wird mit dem Drehhebel 11 betätigt. Auch das Fußteil 7 ist mittels eines Überwurf-Klemmrings 6 mit dem Mantelrohr 2 verbunden. Wenn das Fußteil 7 von dem Reaktionsgefäß 1 abgenommen wird, läßt sich die Fritte 8 leicht reinigen oder austauschen.

Im Bereich der Parallelsynthese sind Hähne bzw. Ventile 9 an den Reaktionsgefäßen 1 bekannt, um die Reaktionsgefäße 1 mit Gasen oder Vakuum beaufschlagen oder Flüssigkeiten zu- oder ableiten zu können. Wenn das Ventil 9 im Fußteil 7 des Reaktionsgefäßes 1 angeordnet ist, kann im geöffneten Zustand die Flüssigkeit abgesaugt werden oder durch Zuführung von Druck zum Reaktionsgefäß 1 aus dem Reaktionsgefäß 1 ausgedrückt werden. Mit einem im Kopfteil 3 angeordneten Ventil kann Gas in das Reaktionsgefäß 1 geleitet oder in dem Reaktionsgefäß 1 ein Vakuum erzeugt werden. Im geschlossenen Zustand wird der Fluidstrom unterbrochen, so daß im Reaktionsgefäß 1 Druck oder Vakuum aufrecht erhalten werden kann.

Die Ventile sind dabei direkt in das Reaktionsgefäß eingearbeitet oder in dem dicht mit dem eigentlichen Reaktionskörper verbundenen Fuß- oder Kopfteil angeordnet. Das Fuß- oder Kopfteil kann dabei in einer speziellen mechanischen Aufnahme sitzen oder auch nur mit dem Mitteilteil des Reaktionsgefäßes 1 (Mantelrohr 2) verbunden sein.

Das Reaktionsgefäß 1 kann einteilig oder mehrteilig (Mantelrohr 2, Kopfteil 3 und Fußteil 7) ausgebildet sein. Bevorzugt ist die dreiteilige Ausbildung, da in diesem Fall das Reaktionsgefäß 1 leicht geöffnet und in seine Teile (Mantelrohr 2, Kopfteil 3 und Fußteil 7) getrennt werden kann, beispielsweise zum reinigen.

Die Mantelrohre 2 bestehen vorzugsweise aus einem chemisch beständigen Material, beispielsweise aus Kunststoff, vorzugsweise aus PTFE oder PFA (Perfluoralkoxy-Copolymer). Zur Gewährung eines Sichtkontaktes zur Reaktionsflüssigkeit in dem Reaktionsgefäß besteht das Mantelrohr 2 bevorzugt aus einem durchsichtigen Material.

PTFE und PFA sind chemisch hochresistente Materialien, die eine gewisse Eigenelastizität besitzen und deren Materialeigenschaften vorteilhafterweise bei der Festphasensynthese auch ein Verkleben der Harze an der Wandung des Mantelrohres 2 verhindern. Daher sind diese Materialien besonders als Material für den Kunststoffrohrabschnitt des Reaktionsgefäßes 1 geeignet, mittels dessen die Reaktionsgefäße 1 in die Aufnahmen 13 eingeschnappt werden können.

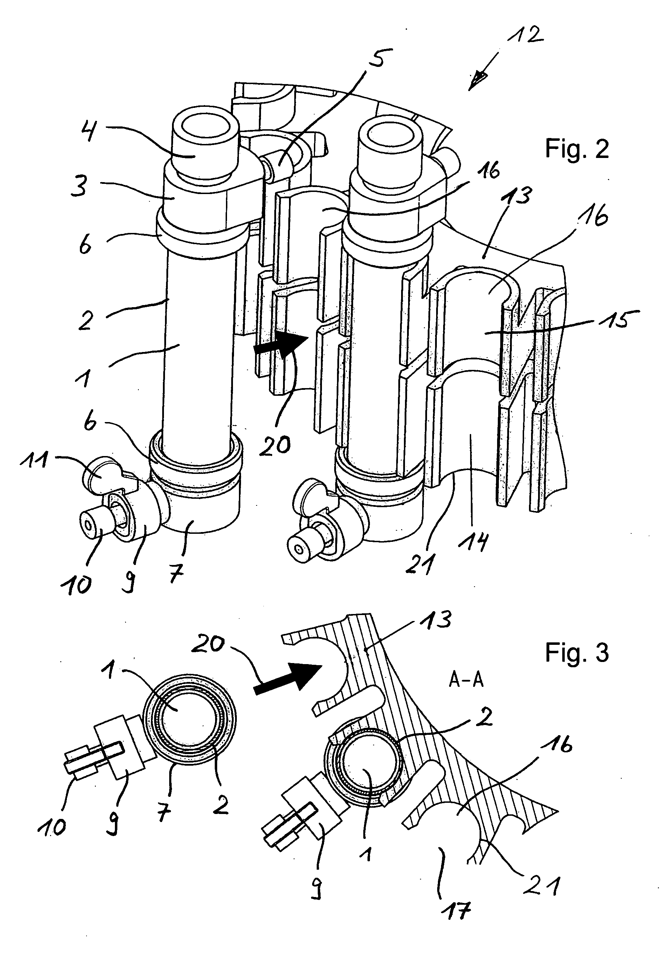

Die Ventile 9 sind in der in Fig. 1 dargestellten Ausführungsform in den Fußteilen 7 der Reaktionsgefäße 1 angeordnet. Die Reaktionsgefäße 1 werden in eine entsprechend ausgebildete Aufnahme 13 der Parallelsynthesevorrichtung 12 montiert. Eine solche Vorrichtung 12 zum Durchführen einer parallelen Festphasensynthese mit Reaktionsgefäßen 1 ist in einem perspektivischen Ausschnitt in Fig. 2 veranschaulicht. Sie umfaßt eine Aufnahme 13 mit einer Mehrzahl benachbart angeordneter Längsnuten 16, die beispielsweise in reihen- oder wie dargestellt in kreisförmiger Anordnung angeordnet sein können. Dabei kann wie dargestellt vorgesehen sein, daß die Aufnahme 13 zwei übereinander liegende, funktionell unterschiedliche Zonen aufweist, nämlich eine untere Heizzone 14 und eine obere Kühlzone 15, beispielsweise für die Rückkondensation von Lösungsmitteln.

Die zum Einsetzen und Halten der Reaktionsgefäße 1 ausgebildeten Bereiche der Längsnuten 16 sind einteilig in der Aufnahme 13 ausgebildet. Wenn funktionell unterschiedliche Zonen vorhanden sind, gilt dies jeweils für eine Zone. Die einteilige Ausbildung bedeutet, daß die Aufnahme 13 keine Befestigungselemente umfaßt, die an ihrem Umfang anzubringen sind, um die Reaktionsgefäße 1 in den Längsnuten 16 zu halten.

Die Längsnuten 16 sind zum Aufnehmen und Halten der Reaktionsgefäße 1 in der Vorrichtung 12 während der Durchführung der Parallelsynthese ausgebildet, wobei die zylindrischen Mantelrohre 2 oder ein zylindrisch ausgebildeter Mittelteilabschnitt eines Reaktionsgefäßes 1 in eine Längsnut 16 eingeführt wird. Hierzu umfaßt die Aufnahme 13 eine in Längsrichtung des eingesetzten Reaktionsgefäßes 1 verlaufende Längsnut 16, die kreisabschnittsförmig ausgebildet ist und in die das zylindrische Mantelrohr 2 eingedrückt werden kann.

Die Mantelrohre 2 bestehen aus einem geringfügig elastischen Material, so daß die Reaktionsgefäße 1 von der durch die elastische Verformung der in die Längsnuten 16 eingesetzten Mantelrohre 2 erzeugten Klemmspannung, die eine radial auf die Mantelrohre 2 gerichtete Klemmkraft erzeugt, in der Aufnahme 13 gehalten werden. Vorteilhafterweise ist vorgesehen, daß die Mantelrohre 2 aus einem elastischen Material gebildet sind, das eine Durchmesserelastizität des Mantelrohrs 2 beim Einsetzen in die Längsnuten 16 von mindestens 1%, bevorzugt mindestens 3% und besonders bevorzugt mindestens 5% aufweist. Bei der Bemessung der Elastizität bzw. des Materials der Mantelrohre 2 kann berücksichtigt werden, daß die elastischen Eigenschaften der Mantelrohre 2 nicht nur vom Material, sondern auch von der Wandstärke und dem Querschnittsdurchmesser abhängen.

Die Längsnuten 16 bzw. die Aufnahme 13 kann in einer bevorzugten Ausführungsform aus einem starren Material, beispielsweise einem Metall bestehen. Dadurch kann einerseits eine hohe Festigkeit und Haltekraft erzielt werden. Andererseits ist es auch in vorteilhafter Weise möglich, eine Heizzone 14 zum Beheizen der Reaktionsgefäße 1 und/oder eine Kühlzone 15 zum Kühlen der Reaktionsgefäße 1 mit jeweils hoher Wärmeleitfähigkeit zu realisieren, wobei bevorzugt die Kühlzone 15 über der Heizzone 14 angeordnet ist. Ferner kann die Parallelsynthesevorrichtung 12 auch eine Einrichtung zum Schütteln oder Rütteln der Reaktionsgefäße 1 aufweisen, mit der die Aufnahme 13 in Bewegung versetzbar ist.

In der in Fig. 2 dargestellten bevorzugten Ausführungsform umfassen die Reaktionsgefäße 1 jeweils ein abnehmbares Kopfteil 3 und/oder ein abnehmbares Fußteil 7. Ein weiteres bevorzugtes Merkmal besteht darin, daß die Längsöffnungen 17 der Längsnuten 16 derart angeordnet sind und die Öffnungsweiten 18 der Längsöffnungen 17 derart relativ zum Durchmesser 19 der Mantelrohre 2 bemessen sind, daß die Mantelrohre 2 der Reaktionsgefäße 1 in einer senkrecht zur Längserstreckung der Mantelrohre 2 verlaufenden Richtung 20 in die Längsnuten 16 eingeführt werden können. Dadurch ist eine besonders platzsparende Bauweise und eine vorteilhafte Handhabung der Parallelsynthesevorrichtung 12 möglich.

Die Fig. 3 zeigt einen waagrechten Schnitt zu Fig. 2. Man erkennt, daß die Aufnahmen 13 Kreisabschnitte 21 sind, die im Einführungsbereich, d.h. in den Längsöffnungen 17 der Längsnuten 16 geringfügig kleiner sind als der Außendurchmesser der Reaktionsgefäße 1, so daß die Reaktionsgefäße 1 sicher gehalten wird und auch unter Temperatureinflüssen der Heizzone 14 und/oder Kühlzone 15 sowie ggf. den Vibrationen der Schüttelbewegung, die zum Temperieren und Mischen der Reaktionsflüssigkeit in dem Reaktionsgefäß 1 notwendig sind, sicher gehalten werden und dennoch leicht und einfach in die Aufnahmen 13 gesteckt oder herausgezogen werden können.

Selbstverständlich sind auch Ausführungsformen möglich, bei denen die Reaktionsgefäße 1 in Längsrichtung der Längsnuten 16 in die Aufnahmen 13 eingeschoben oder herausgezogen werden. Bevorzugt ist jedoch, wie in den Fig. 2 und 3 dargestellt, wenn das Einsetzen der Reaktionsgefäße 1 in die Aufnahmen 13 in einer senkrecht zur Längserstreckung der Mantelrohre 2 verlaufenden Richtung 20 erfolgt bzw. das Entnehmen in der Gegenrichtung.

Vorteilhafterweise weisen die Wandungen der Längsnuten 16 in der Aufnahme 13 ein kreiabschnittsförmiges Profil auf, wobei der zum Einsetzen und Halten eines Reaktionsgefäßes 1 vorgesehene Kreisabschnitt 21 einer Längsnut 16 einen Kreissektor bildet, der größer als ein Halbkreis ist. In diesem Fall umhüllt die Aufnahme 13 ein darin eingesetztes Reaktionsgefäß 1 um mehr als 180°, wodurch es in die Längsnut 16 einschnappt und gehalten wird. Nach einem zusätzlichen vorteilhaften Merkmal kann vorgesehen sein, daß der Mittelwinkel des von dem Kreisabschnitt 21 gebildeten Kreissektors zwischen 180° und 220°, bevorzugt zwischen 185° und 210° und besonders bevorzugt zwischen 190° und 200° beträgt.

Nach einem weiteren vorteilhaften Merkmal kann vorgesehen sein, daß die Mittelwinkel der von den Kreisabschnitten 21 gebildeten Kreissektoren derart bemessen sind, daß die Mantelrohre 2 der Reaktionsgefäße 1 in einer senkrecht zur Längserstreckung der Mantelrohre 2 verlaufenden Richtung 20 in die Längsnuten 16 eingeführt werden können.

Vorteilhafterweise ist die Länge der Längsöffnungen 17 in den Längsnuten 16, d.h. die Länge der Längsnuten 16 größer als die Öffnungsweite 18 der Längsnuten 17, bevorzugt mindestens 2 bis 3 mal so lang. Je länger die Längsnut 16 ist, desto sicherer und fester werden die Reaktionsgefäße 1 in den Aufnahmen 13 gehalten und desto besser ist der Kontakt zur Heizzone 14 oder Kühlzone 15.

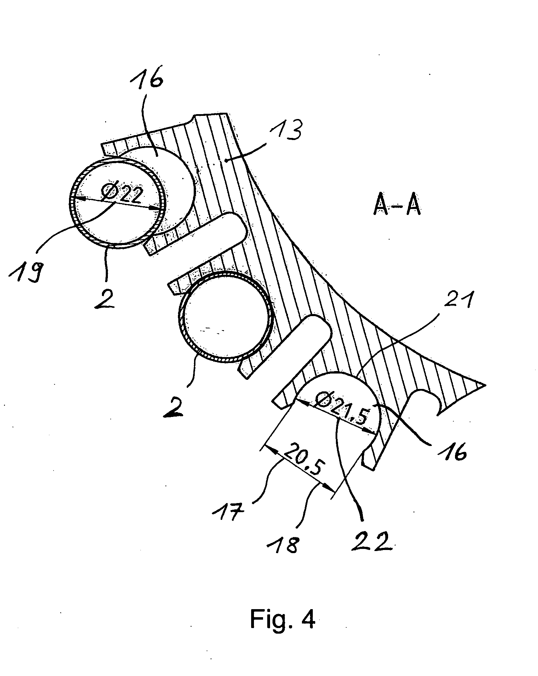

Aus den gleichen Gründen ist es vorteilhaft, wenn die Mantelrohre 2 im wesentlichen entlang des gesamten, die Wandung der Längsnut 16 der Aufnahme 13 bildenden Kreisabschnittes 21 an der Wandung der Aufnahme 13 anliegen. Vorteilhafte Dimensionierungen sind anhand des in Fig. 4 dargestellten Ausführungsbeispiels veranschaulicht, wobei beispielhaft angenommen wird, daß der Außendurchmesser 19 der Mantelrohre 2 22,0 mm beträgt.

Man erkennt, daß bevorzugt der Durchmesser 22 der Längsnuten 16 kleiner als der Außendurchmesser 19 der Mantelrohre 2 ist. Vorteilhafterweise ist der Durchmesser 22 der Längsnuten 16 zwischen 0,01% und 5,0%, bevorzugt zwischen 1% und 3% kleiner als der Außendurchmesser 19 der Mantelrohre 2. In dem Ausführungsbeispiel beträgt der Durchmesser 22 der Längsnuten 16 21,5 mm.

Nach einem anderen vorteilhaften Merkmal ist vorgesehen, daß die Öffnungsweite 18 der Längsnuten 16 kleiner als der Außendurchmesser 19 der Mantelrohre 2 ist. Dabei wird vorteilhafterweise vorgeschlagen, daß die Öffnungsweite 18 der Längsnuten 16 zwischen 0,01% und 15,0%, bevorzugt zwischen 3% und 9% kleiner als der Außendurchmesser 19 der Mantelrohre 2 ist. In dem dargestellten Ausführungsbeispiel beträgt die Öffnungsweite 18 20,5 mm.

Ein weiteres vorteilhaftes Merkmal kann darin bestehen, daß die Öffnungsweite 18 der Längsnuten 16 kleiner als der Durchmesser 22 der Längsnuten ist, vorzugsweise zwischen 0,01% und 10% kleiner, bevorzugt zwischen 2% und 6% kleiner.

### Bezugszeichenliste

- 1: Reaktionsgefäß
- 2: Mantelrohr
- 3: Kopfteil
- 4: Septum
- 5: Kopfteilschlauchanschluß
- 6: Überwurf-Klemmring
- 7: Fußteil
- 8: Fritte
- 9: Ventil
- 10: Schlauchanschluß
- 11: Drehhebel
- 12: Parallelsynthesevorrichtung
- 13: Aufnahme
- 14: Heizzone
- 15: Kühlzone
- 16: Längsnut
- 17: Längsöffnung
- 18: Öffnungsweite
- 19: Durchmesser zu 2
- 20: Richtung
- 21: Kreisabschnitt
- 22: Durchmesser zu 16

## Patentansprüche

1. Vorrichtung (12) zum Durchführen einer Parallelsynthese von Verbindungen, insbesondere eine Vorrichtung für die Festphasensynthese, umfassend eine Mehrzahl von Reaktionsgefäßen (1), die einen als zylindrische Mantelrohre (2) ausgebildeten Mittelteil oder Mittelteilabschnitt aufweisen, und eine Aufnahme (13) zum Aufnehmen und Halten der Reaktionsgefäße (1) in der Vorrichtung (12) während der Durchführung der Parallelsynthese,
**dadurch gekennzeichnet, daß**
die Aufnahme (13) in Längsrichtung der eingesetzten Reaktionsgefäße (1) verlaufende Längsnuten (16) umfaßt, wobei die Längsnuten (16) kreisabschnittsförmig sind und zum Aufnehmen der zylindrischen Mantelrohre (2) ausgebildet sind,
die Mantelrohre (2) aus einem geringfügig elastischen Material gebildet sind und
die Reaktionsgefäße (1) von der durch die elastische Verformung der in die Längsnuten (16) eingesetzten Mantelrohre (2) erzeugten Klemmspannung, die eine radial auf die Mantelrohre (2) gerichtete Klemmkraft erzeugt, in der Aufnahme (13) gehalten werden.

2. Vorrichtung (12) nach Anspruch 1, **dadurch gekennzeichnet, daß** die Mantelrohre (2) aus einem elastischen Material gebildet sind, das eine Durchmesserelastizität des Mantelrohrs (2) beim Einsetzen in die Längsnuten (16) von mindestens 1%, bevorzugt mindestens 3% und besonders bevorzugt mindestens 5% aufweist.

3. Vorrichtung (12) nach einem der vorhergehenden Ansprüche, **dadurch gekennzeichnet, daß** der zum Einsetzen und Halten der Reaktionsgefäße 1 ausgebildete Bereich der Längsnuten (16) einteilig in der Aufnahme (13) ausgebildet ist.

4. Vorrichtung (12) nach einem der vorhergehenden Ansprüche, **dadurch gekennzeichnet, daß** die Wandungen der Längsnuten (16) in der Aufnahme (13) ein kreisabschnittsförmiges Profil aufweisen, wobei der zum Einsetzen und Halten eines Reaktionsgefäßes (1) vorgesehene Kreisabschnitt (21) einer Längsnut (16) einen Kreissektor bildet, der größer als ein Halbkreis ist, so daß das darin eingesetzte Reaktionsgefäß (1) um mehr als 180° umhüllt und dadurch gehalten wird.

5. Vorrichtung (12) nach Anspruch 4, **dadurch gekennzeichnet, daß** der Mittelwinkel des von dem Kreisabschnitt (21) gebildeten Kreissektors zwischen 180° und 220°, bevorzugt zwischen 185° und 210° und besonders bevorzugt zwischen 190° und 200° beträgt.

6. Vorrichtung (12) nach einem der Ansprüche 4 bis 5, **dadurch gekennzeichnet, daß** die Mittelwinkel der von den Kreisabschnitten (21) gebildeten Kreissektoren derart bemessen sind, daß die Mantelrohre (2) der Reaktionsgefäße (1) in einer senkrecht zur Längserstreckung der Mantelrohre (2) verlaufenden Richtung (20) in die Längsnuten (16) eingeführt werden können.

7. Vorrichtung (12) nach einem der vorhergehenden Ansprüche, **dadurch gekennzeichnet, daß** die Reaktionsgefäße (1) jeweils ein abnehmbares Kopfteil (3) und/oder ein abnehmbares Fußteil (7) umfassen.

8. Vorrichtung (12) nach einem der vorhergehenden Ansprüche, **dadurch gekennzeichnet, daß** die Längsöffnungen (17) der Längsnuten (16) derart angeordnet sind und die Öffnungsweiten (18) der Längsöffnungen (17) derart relativ zum Durchmesser (19) der Mantelrohre (2) bemessen sind, daß die Mantelrohre (2) der Reaktionsgefäße (1) in einer senkrecht zur Längserstreckung der Mantelrohre (2) verlaufenden Richtung (20) in die Längsnuten (16) eingeführt werden können.

9. Vorrichtung (12) nach Anspruch 8, **dadurch gekennzeichnet, daß** der Durchmesser (22) der Längsnuten (16) kleiner als der Außendurchmesser (19) der Mantelrohre (2) ist.

10. Vorrichtung (12) nach Anspruch 9, **dadurch gekennzeichnet, daß** der Durchmesser (22) der Längsnuten (16) zwischen 0,01% und 5,0%, bevorzugt zwischen 1% und 3% kleiner als der Außendurchmesser (19) der Mantelrohre (2) ist.

11. Vorrichtung (12) nach Anspruch 8, **dadurch gekennzeichnet, daß** die Öffnungsweite (18) der Längsnuten (16) kleiner als der Außendurchmesser (19) der Mantelrohre (2) ist.

12. Vorrichtung (12) nach Anspruch 11, **dadurch gekennzeichnet, daß** die Öffnungsweite (18) der Längsnuten (16) zwischen 0,01% und 15,0%, bevorzugt zwischen 3% und 9% kleiner als der Außendurchmesser (19) der Mantelrohre (2) ist.

13. Vorrichtung (12) nach Anspruch 8, **dadurch gekennzeichnet, daß** die Öffnungsweite (18) der Längsnuten (16) kleiner als der Durchmesser (22) der Längsnuten (16) ist.

14. Vorrichtung (12) nach Anspruch 13, **dadurch gekennzeichnet, daß** die Öffnungsweite (18) der Längsnuten (16) zwischen 0,01% und 10%, bevorzugt zwischen 2% und 6% kleiner als der Durchmesser (22) der Längsnuten (16) ist.

15. Vorrichtung (12) nach Anspruch 8, **dadurch gekennzeichnet, daß** die Mantelrohre (2) im wesentlichen entlang des gesamten, die Wandung der Längsnut (16) der Aufnahme bildenden Kreisabschnittes (21) an der Wandung der Aufnahme (13) anliegen.

16. Vorrichtung (12) nach einem der vorhergehenden Ansprüche, **dadurch gekennzeichnet, daß** die Länge der Längsöffnungen (17) in den Längsnuten (16) größer als die Öffnungsweite (18) der Längsnuten (16) ist.

17. Vorrichtung (12) nach einem der vorhergehenden Ansprüche, **dadurch gekennzeichnet, daß** die Längsnuten (16) der Aufnahmen (13) aus einem starren Material, vorzugsweise aus Metall bestehen.

18. Vorrichtung (12) nach einem der vorhergehenden Ansprüche, **dadurch gekennzeichnet, daß** die Mantelrohre (2) aus einem Kunststoff, vorzugsweise aus PTFE oder PTA bestehen.

19. Vorrichtung (12) nach einem der vorhergehenden Ansprüche, **dadurch gekennzeichnet, daß** die Mantelrohre (2) aus einem durchsichtigen Material bestehen.

20. Vorrichtung (12) nach einem der vorhergehenden Ansprüche, **dadurch gekennzeichnet, daß** die Reaktionsgefäße (1) Fußteile (7) mit einem Ventil (9) aufweisen.

21. Vorrichtung (12) nach einem der vorhergehenden Ansprüche, **dadurch gekennzeichnet, daß** die Reaktionsgefäße (1) Fußteile (7) mit in die Fußteile (7) integrierten Fritten (8) aufweisen.

22. Vorrichtung (12) nach einem der vorhergehenden Ansprüche, **dadurch gekennzeichnet, daß** die Aufnahme (13) eine Heizzone (14) zum Beheizen der Reaktionsgefäße (1) aufweist.

23. Vorrichtung (12) nach einem der vorhergehenden Ansprüche, **dadurch gekennzeichnet, daß** die Aufnahme (13) eine Kühlzone (15) zum Kühlen der Reaktionsgefäße (1) aufweist.

24. Vorrichtung (12) nach den Ansprüchen 22 und 23, **dadurch gekennzeichnet, daß** die Kühlzone (15) über der Heizzone (14) angeordnet ist.

25. Vorrichtung (12) nach einem der vorhergehenden Ansprüche, **dadurch gekennzeichnet, daß** sie eine Einrichtung zum Schütteln oder Rütteln der Reaktionsgefäße (1) aufweist, mit der die Aufnahme (13) in Bewegung versetzbar ist.
